(19) Europäisches Patentamt / European Patent Office / Office européen des brevets

(11) **EP 3 696 935 A1**

(12) **EUROPÄISCHE PATENTANMELDUNG**

(43) Veröffentlichungstag:
**19.08.2020   Patentblatt 2020/34**

(51) Int Cl.:
***H02J 3/38*** (2006.01)

(21) Anmeldenummer: **19157434.2**

(22) Anmeldetag: **15.02.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Weidauer, Jens**
**90763 Fürth (DE)**

(54) **ENERGIEQUELLE IN EINEM GLEICHSPANNUNGSNETZ, VERFAHREN ZUM BETRIEB EINER SOLCHEN ENERGIEQUELLE, GLEICHSPANNUNGSNETZ MIT EINER MEHRZAHL SOLCHER ENERGIEQUELLEN UND VERFAHREN ZUM BETRIEB EINES SOLCHEN GLEICHSPANNUNGSNETZES**

(57)     Die Erfindung ist eine Energiequelle (14) in Form einer Gleichstrom- oder Gleichspannungsquelle in einem Gleichspannungsnetz (30) und ein Verfahren zu deren Betrieb, wobei mittels der Energiequelle (14) elektrische Energie auf einen Verknüpfungspunkt (12) des Gleichspannungsnetzes (30) einspeisbar ist und wobei die Energiequelle (14) eine Tertiärregelungseinheit (32) zur dezentralen Tertiärregelung und zum automatischen Zuschalten oder Abschalten der Energiequelle (14) aufweist.

FIG 5

EP 3 696 935 A1

**Beschreibung**

Die Erfindung betrifft eine im Folgenden kurz als Energiequelle bezeichnete Energiequellenvorrichtung in einem Gleichspannungsnetz. Die Energiequellenvorrichtung umfasst zum einen die eigentliche Energiequelle, bei einer Energiequellenvorrichtung in einem Gleichspannungsnetz also eine Gleichstrom- oder Gleichspannungsquelle. Darüber hinaus umfasst die Energiequellenvorrichtung zumindest elektrische oder elektronische Funktionseinheiten für eine sogenannte Primärregelung, eine Sensorik zur Erfassung zumindest einer elektrischen Größe in dem Gleichspannungsnetz und/oder elektrische oder elektronische Funktionseinheiten zum Datenaustausch mit anderen Energiequellenvorrichtungen und/oder einer übergeordneten Einheit. Im Interesse einer besseren Lesbarkeit der weiteren Beschreibung wird diese mit dem Begriff "Energiequelle" anstelle von "Energiequellenvorrichtung" fortgesetzt. Bei jeder Verwendung des Begriffs "Energiequelle" ist der Begriff "Energiequellenvorrichtung" stets mitzulesen.

Die Erfindung betrifft weiterhin ein Verfahren zum Betrieb einer Energiequelle der vorgenannten Art, ein Gleichspannungsnetz mit einer Mehrzahl solcher Energiequellen und schließlich ein Verfahren zum Betrieb eines solchen Gleichspannungsnetzes.

Energiequellen, welche in einem elektrischen Netz gemeinsam eine Versorgung zumindest eines elektrische Energie benötigenden Verbrauchers sicherstellen, werden überwacht. Bekannt sind insoweit eine Primärregelung, eine Sekundärregelung und eine Tertiärregelung. Die Primärregelung ermöglicht den parallelen Betrieb mehrerer Energiequellen und bestimmt mittelbar oder unmittelbar die jeweils von einer Energiequelle abgegebene elektrische Leistung. Auf Basis der Primärregelung kann eine Einstellung der insgesamt in dem elektrischen Netz verfügbaren elektrischen Energie und/oder eine Kommutierung der Leistung von zumindest einer Energiequelle zu zumindest einer anderen Energiequelle erfolgen. Die Sekundärregelung hat eine Vermeidung oder zumindest Verringerung lastabhängiger Schwankungen in dem elektrischen Netz zum Ziel. Die Tertiärregelung bewirkt ein Zu- oder Abschalten einzelner Energiequellen in Abhängigkeit von einem Leistungsbedarf in dem elektrischen Netz.

Die Sekundärregelung und die Tertiärregelung sind in einer im Folgenden als Leitstation bezeichneten übergeordneten Einheit (die Leitstation ist den Energiequellen hierarchisch übergeordnet) realisiert. Aufgrund der Sekundär- oder Tertiärregelung resultierende Steuersignale für die das elektrische Netz speisenden Energiequellen werden von der Leitstation an die jeweilige Energiequelle oder die jeweiligen Energiequellen übermittelt. Für eine solche Übermittlung kommt zum Beispiel ein Bussystem in Betracht.

Bei einem Ausfall des Leitsystems und/oder einem Ausfall der kommunikativen Verbindung zwischen dem Leitsystem und den Energiequellen stehen die Sekundärregelung und die Tertiärregelung nicht mehr zur Verfügung. Dies kann zu einer Überlastsituation und schließlich zu einem Ausfall des elektrischen Netzes führen.

Eine Aufgabe der Erfindung besteht ausgehend davon darin, eine elektrische Energiequelle, insbesondere eine Energiequelle in Form einer Gleichstrom- oder Gleichspannungsquelle, ein Verfahren zum Betrieb einer solchen Energiequelle, ein elektrisches Netz mit einer Mehrzahl solcher Energiequellen und eine Verfahren zum Betrieb eines solchen Netzes anzugeben, bei der bzw. bei dem eine Gefahr eines Netzausfalls aufgrund eines Ausfalls eines Leitsystems oder eines Ausfalls einer kommunikativen Verbindung zum Leitsystem vermieden wird.

Diese Aufgabe wird bezüglich der Energiequelle erfindungsgemäß mittels einer Energiequelle (Energiequellenvorrichtung) in Form einer Gleichstrom- oder Gleichspannungsquelle in einem Gleichspannungsnetz, wobei mittels der Energiequelle elektrische Energie auf einen Verknüpfungspunkt des Gleichspannungsnetzes einspeisbar ist und beim Betrieb durch die Energiequelle elektrische Energie auf den Verknüpfungspunkt eingespeist wird, dadurch gelöst, dass die Energiequelle eine als Tertiärregelungseinheit fungierende Funktionseinheit aufweist, welche zur dezentralen Tertiärregelung und zum automatischen Zuschalten oder Abschalten der Energiequelle bestimmt und eingerichtet ist.

Bezüglich des Verfahrens wird diese Aufgabe erfindungsgemäß gelöst durch die Merkmale des parallelen Verfahrensanspruchs. Danach ist vorgesehen, dass bei einem Verfahren zum Betrieb einer Energiequelle (Energiequellenvorrichtung) in Form einer Gleichstrom- oder Gleichspannungsquelle und in einem Gleichspannungsnetz mittels der Energiequelle elektrische Energie auf einen Verknüpfungspunkt des Gleichspannungsnetzes eingespeist wird, dass die Energiequelle eine als Tertiärregelungseinheit fungierende Funktionseinheit zur dezentralen Tertiärregelung aufweist und dass die Tertiärregelungseinheit zum automatischen Zuschalten oder Abschalten der Energiequelle ein Zuschalt- oder Abschaltsignal erzeugt.

Die Erfindung ist insgesamt auch ein Gleichspannungsnetz mit einerseits einer Mehrzahl von an einem gemeinsamen Verknüpfungspunkt zusammengeschlossenen Energiequellen der hier und im Folgenden beschriebenen Art sowie andererseits zumindest einem an den Verknüpfungspunkt angeschlossenen Verbraucher.

Die Erfindung ist darüber hinaus auch ein Verfahren zum Betrieb eines solchen Gleichspannungsnetzes. Das Verfahren hat im Zusammenhang mit dem hier vorgeschlagenen Ansatz unterschiedliche Aspekte. Soweit im Rahmen der dezentralen Tertiärregelung ein automatisches Zuschalten oder Abschalten einer Energiequelle vorgesehen ist, wird ein gleichzeitiges Zuschalten oder Abschalten mehrerer Energiequellen durch verschiedene Verzögerungszeiten der Tertiärregelungseinheiten verhindert. Soweit in dem Gleichspannungsnetz eine Leitstation mit einer dort implementierten zentralen Tertiärregelung vorgesehen ist, überwachen die dezentralen Tertiärregelungseinheiten die Kommunikation mit der Leitstation. Bei einem Ausfall der Kommunikation wird automatisch die dezentrale Tertiärregelung durch die Tertiärregelungseinheiten der Energiequellen aktiviert. Diese übernehmen dann anstelle der Leitstation die Tertiärregelung.

Der Vorteil der hier vorgeschlagenen Lösung besteht darin, dass die bisher dem Leitsystem zugeordnete Tertiärregelung nun dezentral und zwar in jeder Energiequelle mittels einer jeweils eigenen Tertiärregelungseinheit implementiert ist. Bei einem Ausfall des Leitsystems steht die Tertiärregelung als dezentrale Tertiärregelung weiterhin zur Verfügung. Eine zentrale Leitstation wird damit entbehrlich. Weil wegen des bei einem Ausfall des Leitsystems oder der Kommunikation mit dem Leitsystem zu besorgenden Ausfalls des Gesamtsystems oftmals das Leitsystem und/oder die Kommunikation mit dem Leitsystem redundant ausgeführt sind, entfällt die Notwendigkeit einer solchen redundanten Ausführung.

Bei einem System, welches eine zentrale Leitstation umfasst, kann die Tertiärregelung als zentrale Tertiärregelung (in der Leitstation) und als dezentrale Tertiärregelung (in den Energiequellen) realisiert sein, wobei die dezentrale Tertiärregelung aktiviert wird, wenn die Leitstation oder die kommunikative Verbindung zur Leitstation ausfällt.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform der gegenständlichen Energiequelle oder deren Tertiärregelungseinheit sowie des gegenständlichen Betriebsverfahrens nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen. Schließlich ist darauf hinzuweisen, dass das hier angegebene Verfahren auch entsprechend der abhängigen Vorrichtungsansprüche weitergebildet sein kann und umgekehrt.

Bei einer Ausführungsform der Energiequelle umfasst diese eine Tertiärregelungseinheit, welche zur Erzeugung eines Zuschaltsignals bestimmt und eingerichtet ist, wobei das Zuschaltsignal erzeugt wird, wenn die Energiequelle ausgeschaltet ist und eine Gleichspannungsamplitude am Verknüpfungspunkt unter einen ersten Vergleichswert sinkt. Dies ist eine (dezentrale) Implementation einer Zuschaltregel für die Energiequelle. Wenn die von der Zuschaltregel umfassten Bedingungen erfüllt sind, erfolgt das automatische Zuschalten der Energiequelle oder das automatische Zuschalten der Energiequelle wird zumindest eingeleitet. Bei einem entsprechenden Verfahren zum Betrieb der Energiequelle erzeugt die Tertiärregelungseinheit ein Zuschaltsignal zum automatischen Zuschalten der Energiequelle, wenn die Energiequelle ausgeschaltet ist und eine Gleichspannungsamplitude am Verknüpfungspunkt unter den ersten Vergleichswert sinkt.

Bei einer weiteren Ausführungsform der Energiequelle umfasst diese eine Tertiärregelungseinheit, welche zur Erzeugung eines Abschaltsignals bestimmt und eingerichtet ist, wobei das Abschaltsignal erzeugt wird, wenn die Energiequelle eingeschaltet ist und entweder eine bzw. die Gleichspannungsamplitude am Verknüpfungspunkt einen zweiten Vergleichswert überschreitet oder eine von der Energiequelle abgegebene Wirkleistung einen dritten Vergleichswert unterschreitet. Dies ist eine (dezentrale) Implementation einer Abschaltregel für die Energiequelle. Wenn die von der Abschaltregel umfassten Bedingungen erfüllt sind, erfolgt das automatische Abschalten der Energiequelle oder das automatische Abschalten der Energiequelle wird zumindest eingeleitet. Bei einem entsprechenden Verfahren zum Betrieb der Energiequelle erzeugt die Tertiärregelungseinheit ein Abschaltsignal zum automatischen Abschalten der Energiequelle, wenn die Energiequelle eingeschaltet ist und entweder die Gleichspannungsamplitude am Verknüpfungspunkt den zweiten Vergleichswert überschreitet oder die von der Energiequelle abgegebene Wirkleistung den dritten Vergleichswert unterschreitet.

Üblicherweise, aber grundsätzlich optional, umfasst eine Energiequelle mit einer solchen Implementation einer Zuschaltregel auch eine solche Implementation einer Abschaltregel und umgekehrt.

Bei einer bevorzugten Ausführungsform der Energiequelle oder des Verfahrens zu deren Betrieb ist das Zuschaltsignal und/oder das Abschaltsignal durch die Tertiärregelungseinheit um eine vorgegebene oder vorgebbare Verzögerungszeit zeitverzögert ausgebbar und wird beim Betrieb um die Verzögerungszeit zeitverzögert ausgegeben. Dies vermeidet bei unterschiedlichen Verzögerungszeiten ein ungewolltes gleichzeitiges Zuschalten oder Abschalten mehrerer Energiequellen.

Bei einer besonderen Ausführungsform der Energiequelle oder des Verfahrens zu deren Betrieb werden unterschiedliche Verzögerungszeiten dadurch gewährleistet, dass den von einem Gleichspannungsnetz umfassten Energiequellen jeweils unterschiedliche Verzögerungszeiten vorgegeben sind, zum Beispiel indem in dafür vorgesehene Speicherbereiche Zeitwerte eingeprägt sind oder geladen werden, welche eine jeweilige Verzögerungszeit kodieren, und diese Zeitwerte jeweils unterschiedlich sind.

Bei einer besonderen Ausführungsform der Energiequelle oder des Verfahrens zu deren Betrieb hören die Tertiärregelungseinheiten gewissermaßen jede Kommunikation mit einem übergeordneten Leitsystem mit und aktivieren bei einem Ausfall der Kommunikation mit dem Leitsystem die dezentrale Tertiärregelung durch die jeweilige Tertiärregelungseinheit.

Die eingangs genannte Aufgabe wird auch mit einer Tertiärregelungseinheit gelöst, welche zum Beispiel im Wege einer Nachrüstung in eine bereits in Betrieb befindliche Energiequelle integriert werden kann, die nach dem Verfahren wie hier und im Folgenden beschrieben arbeitet und dazu Mittel zur Durchführung des Verfahrens umfasst. Das Verfahren ist zur automatischen Ausführung bevorzugt in Form eines Computerprogramms realisiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Energiequelle oder eine Tertiärregelungseinheit, in deren Speicher als Mittel zur Durchführung des Verfahrens und seiner Ausgestaltungen ein solches Computerprogramm geladen oder ladbar ist.

Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen, sofern nicht ausdrücklich darauf hingewiesen ist, dass einzelne Aktionen durch einen Benutzer des Computerprogramms veranlasst werden. Zumindest bedeutet jede Verwendung des Begriffs "automatisch", dass die betreffende Aktion aufgrund des Computerprogramms oder unter Kontrolle des Computerprogramms erfolgt.

Anstelle eines Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von dem Begriff Software oder dem Begriff Computerprogramm auch andere Implementationsmöglichkeiten, nämlich insbesondere eine Implementation in Firmware oder in Firm- und Software oder in Firm- und Hardware, umfasst sind.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen

FIG 1　　ein Energieerzeugungssystem mit Energiequellen und Energieverbrauchern,

FIG 2　　und

FIG 3　　Droopfunktionen zur Primärregelung einer Energiequelle,

FIG 4　　ein Energieerzeugungssystem wie in FIG 1 mit einer optionalen oder nur zeitweise verfügbaren Leitstation,

FIG 5　　eine Energiequelle eines Energieerzeugungssystems wie in FIG 4 mit einer als Tertiärregelungseinheit fungierenden Funktionseinheit,

FIG 6　　ein Logikdiagramm als Beispiel für eine mögliche Implementation einer dezentralen Tertiärregelung und

FIG 7　　im Rahmen der Tertiärregelung resultierende Zustände einer Energiequelle wie in FIG 5.

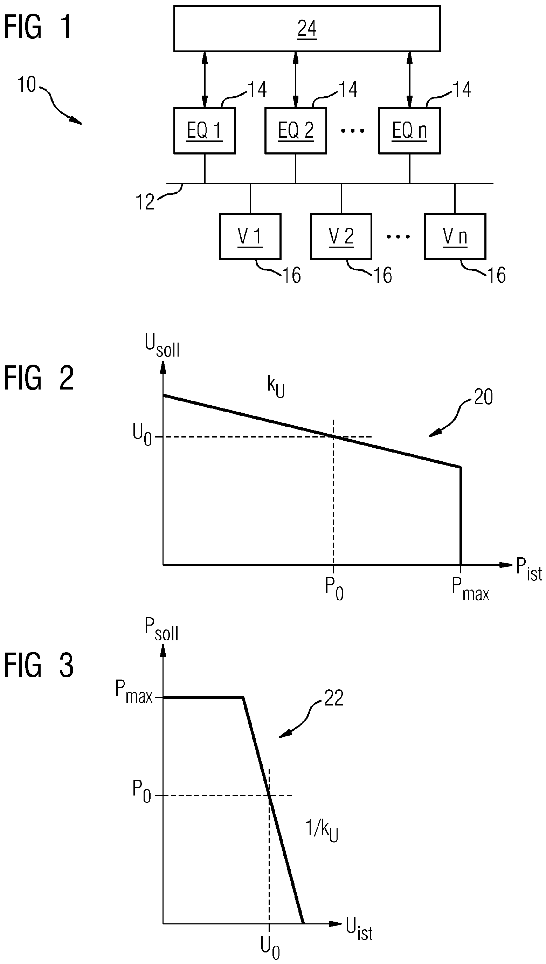

Die Darstellung in FIG 1 zeigt schematisch stark vereinfacht ein Energieerzeugungssystem 10. Das Energieerzeugungssystem 10 umfasst eine Mehrzahl von an einem Verknüpfungspunkt 12 zusammengeschlossenen Energiequellen 14 (symbolisch mit EQ1, EQ2 ... EQn bezeichnet). Mittels der Energiequellen 14 werden an den Verknüpfungspunkt 12 angeschlossene und im Folgenden mitunter kurz als Verbraucher 16 bezeichnete Energieverbraucher 16 (symbolisch mit V1, V2 ... Vn bezeichnet) mit elektrischer Energie versorgt.

Die Energiequellen 14 stellen gemeinsam die Versorgung der Verbraucher 16 sicher. Dies schließt aber nicht aus, dass eine einzelne Energiequelle 14 oder einzelne Energiequellen 14 bedarfsabhängig zu- oder abgeschaltet werden. Eine gemeinsame Versorgung der Verbraucher 16 mittels der Energiequellen 14 bedeutet also nicht, dass alle an den Verknüpfungspunkt 12 angeschlossenen Energiequellen 14 permanent aktiv sind.

Die Energieversorgung kann auch auf der Basis von Gleichspannung ausgeführt werden. Dann stellen die Energiequellen 14 am Verknüpfungspunkt 12 eine Gleichspannung mit definierter Amplitude (Gleichspan-

nungsamplitude $U_{ist}$) für die Energieverbraucher 16 bereit. In einem solchen Energieerzeugungssystem 10 arbeiten die Energiequellen 14 entweder als Gleichspannungsquellen oder Gleichstromquellen.

In den Energiequellen 14, also als Bestandteil der Funktionalität jeder Energiequelle 14, ist die sogenannte (an sich bekannte) Primärregelung realisiert. Die Primärregelung ermöglicht den Parallelbetrieb mehrerer Energiequellen 14. Die Primärregelung wird auf Basis sogenannter (an sich bekannter) Droopfunktionen 20, 22 (FIG 2, FIG 3) implementiert. Diese unterscheiden sich abhängig von der Betriebsweise der jeweiligen Energiequelle 14.

Bei einem Betrieb einer Energiequelle 14 als Gleichspannungsquelle bewirkt die Droopfunktion 20 in Abhängigkeit von einer Leistung $P_{ist}$, welche die Energiequelle 14 an ihrem Ausgang und damit am Verknüpfungspunkt 12 bereitstellt, eine Absenkung einer von der Energiequelle 14 ausgegebenen Gleichspannungsamplitude $U_{soll}$.

Bei einem Betrieb einer Energiequelle 14 als Gleichstromquelle bewirkt die Droopfunktion 22 in Abhängigkeit von einer von der Energiequelle 14 ausgegebenen Gleichspannungsamplitude $U_{ist}$ eine Absenkung einer von der Energiequelle 14 an ihrem Ausgang abgegebenen und damit in den Verknüpfungspunkt 12 eingespeisten Leistung $P_{soll}$.

Die Darstellungen in FIG 2 und FIG 3 zeigen jeweils exemplarisch eine Droopfunktion 20, 22 für einen Betrieb einer als Spannungsquelle arbeitenden Energiequelle 14 (FIG 2) bzw. für einen Betrieb einer als Stromquelle arbeitenden Energiequelle 14 (FIG 3).

Die Parameter der in FIG 2 gezeigten Droopfunktion 20

$$U_{soll} = k_u \left( P_0 - P_{ist} \right) + U_0$$

sind die Sollamplitude $U_{soll}$ der Gleichspannung, welche vom Spannungsregler der Energiequelle 14 bereitgestellt wird, der Gradient $k_u$ der Droopfunktion 20, der Leistungsaufpunkt Po der Droopfunktion 20, der Spannungsaufpunkt Uo der Droopfunktion 20 und die aktuell am Verknüpfungspunkt 12 bereitgestellte Leistung $P_{ist}$ der Energiequelle 14 (gelieferte Leistung ist positiv).

Die Parameter der in FIG 3 gezeigten Droopfunktion 22

$$P_{soll} = 1/k_u \left( U_0 - U_{ist} \right) + P_0$$

sind der Sollwert $P_{soll}$ der Leistung, welche vom Leistungsregler bzw. Stromregler der Energiequelle 14 bereitgestellt wird (gelieferte Leistung ist positiv), der Gradient $1/ku$ der Droopfunktion 22, der Leistungsaufpunkt Po der Droopfunktion 22, der Spannungsaufpunkt Uo der Droopfunktion 22 und die aktuelle Amplitude der Gleichspannung $U_{ist}$ am Verknüpfungspunkt 12 (gelieferte Leistung ist positiv).

Während die Primärregelung Teil der Funktion einer jeden Energiequelle 14 ist, sind eine sogenannte (an sich bekannte) Sekundärregelung sowie eine sogenannte (an sich bekannte) Tertiärregelung in einem Leitsystem 24 (FIG 1) implementiert. Das Leitsystem 24 ist eine den an einem gemeinsamen Verknüpfungspunkt 12 zusammengeschlossenen Energiequellen 14 hierarchisch übergeordnete Einheit.

In Abhängigkeit von einem Leistungsbedarf der angeschlossenen Verbraucher 16 müssen Energiequellen 14 zu- und abgeschaltet werden. Diese Aufgabe übernimmt die Tertiärregelung. Die der Tertiärregelung unterlagerte Sekundärregelung sorgt dafür, dass die Amplitude der am Verknüpfungspunkt 12 bereitgestellten Gleichspannung konstant oder zumindest im Wesentlichen konstant ist und nicht lastabhängig schwankt. Dazu variiert die Sekundärregelung die Parameter der unterlagerten Primärregelungen, also die Parameter der jeweiligen Droopfunktion 20, 22. Insoweit kommt zum Beispiel in Betracht, dass die Leistungsaufpunkte der Droopfunktion 20, 22 für alle Energiequellen 14 von der Sekundärregelung verändert werden. Die Sekundärregelung verschiebt damit die Gerade der jeweiligen Droopfunktion 20, 22 nach rechts oder links bzw. nach oben oder unten.

Zum Zu- oder Abschalten einer Energiequelle 14 aufgrund der Tertiärregelung sowie zum Verändern der Parameter zumindest einer Primärregelung ist das Leitsystem 24 in grundsätzlich an sich bekannter Art und Weise mit jeder Energiequelle 14 kommunikativ verbunden, zum Beispiel über einen Feldbus. Diese kommunikative Verbindung ist in der Darstellung in FIG 1 in Form der Doppelpfeile zwischen den Energiequellen 14 und dem Leitsystem 24 gezeigt. Die Doppelpfeile veranschaulichen einerseits eine Kommunikationsinfrastruktur, also zum Beispiel einen Feldbus, und andererseits im Rahmen der Kommunikation übermittelte Daten, also zum Beispiel nach einem Busprotokoll übermittelte Telegramme.

Bei einem Ausfall des Leitsystems 24 und/oder einem Ausfall der Verbindung zwischen Leitsystem 24 und zumindest einer Energiequelle 14 sind die Funktionen der Tertiär- und Sekundärregelung nicht mehr gegeben oder zumindest nicht mehr vollständig gegeben. Speziell die dann fehlende Tertiärregelung kann bei sich ändernder Last zu einer Überlastung der aktiven Energiequellen 14 und in Folge zu einer Schutzabschaltung der oder jeder überlasteten Energiequelle 14 und damit schließlich zu einem Ausfall der Energieversorgung insgesamt führen.

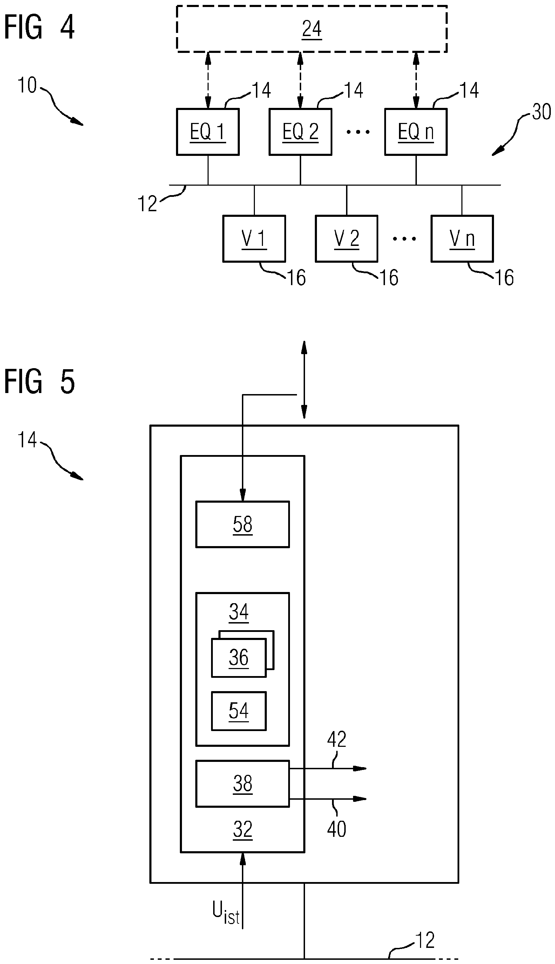

Der hier vorgeschlagene Ansatz betrifft einen Betrieb eines in FIG 4 auf der Basis der Darstellung in FIG 1 gezeigten Gleichspannungsnetzes 30. Konkret betrifft der hier vorgeschlagene Ansatz den Betrieb eines Gleichspannungsnetzes 30 ohne ein überlagertes Leitsystem 24 oder einen Betrieb eines Gleichspannungsnetzes 30, in dem ein überlagertes Leitsystem 24 zumindest zeitweise nicht verfügbar ist. Das Gleichspannungsnetz 30 ist ein Energieerzeugungssystem 10 mit einer Mehrzahl von an einen gemeinsamen Verknüpfungspunkt 12 angeschlossenen Energiequellen 14 in Form von Gleichspannungs- oder Gleichstromquellen.

Nach dem hier vorgeschlagenen Ansatz ist für einen Betrieb eines Gleichspannungsnetzes 30 eine dezentrale Tertiärregelung in allen Energiequellen 14 anstelle einer zentralen Tertiärregelung eines Leitsystems 24 oder ergänzend zu einer zentralen Tertiärregelung eines Leitsystems 24 vorgesehen. Die Primärregelung bleibt wie bisher bestehen und erfolgt zum Beispiel auf Basis von Droopfunktionen 20, 22 (FIG 2, FIG 3).

Die dezentrale Tertiärregelung in allen Energiequellen 14 ist mittels einer Tertiärregelungseinheit 32 (FIG 5) in jeder Energiequelle 14 realisiert. Die Tertiärregelungseinheit 32 ist dafür bestimmt und eingerichtet, ein automatisches Zuschalten oder ein automatisches Abschalten einer jeweiligen Energiequelle 14 zu bewirken. Mittels ihrer Tertiärregelungseinheit 32 kann jede Energiequelle 14 gleichsam selbständig entscheiden, wann sie sich innerhalb des Gleichspannungsnetzes 30 zuschaltet und elektrische Leistung am gemeinsamen Verknüpfungspunkt 12 des Gleichspannungsnetzes 30 bereitstellt und wann sie sich wieder abschaltet.

Die Kriterien für das automatische Zu- oder Abschalten werden aus Netzgrößen, die allen Energiequellen 14 an ihrem Anschlusspunkt (elektrisch gleichwertig mit dem gemeinsamen Verknüpfungspunkt 12) zugänglich sind, abgeleitet. Dabei wird ausgenutzt, dass sich die Gleichspannungsamplitude $U_{ist}$ am Verknüpfungspunkt 12 aufgrund der Primärregelung in den Energiequellen 14 je nach Lastzustand am Verknüpfungspunkt 12 ändert. Zuvor (bei einem System mit Leitsystem 24 und zentraler Tertiär- und Sekundärregelung) hatte die Sekundärregelung eine konstante Gleichspannungsamplitude $U_{ist}$ zum Ziel. Bei einem System ohne Leitsystem 24, wie dies nach dem hier vorgeschlagenen Ansatz vorgesehen oder zumindest möglich ist, existiert keine Sekundärregelung mehr, welche die Gleichspannungsamplitude $U_{ist}$ am Verknüpfungspunkt 12 regelt, so dass die oben genannte Änderung der Gleichspannungsamplitude $U_{ist}$ je nach Lastzustand am Verknüpfungspunkt 12 auftritt.

Folgende Größen dienen einer Energiequelle 14 als Entscheidungskriterium zum automatischen Zu- oder Abschalten:
Zum Zuschalten einer Energiequelle 14 wird überwacht, ob die Energiequelle 14 ausgeschaltet ist und die Gleichspannungsamplitude $U_{ist}$ am Verknüpfungspunkt 12 unter einen ersten Vergleichswert sinkt.

Zum Abschalten einer Energiequelle 14 wird überwacht, ob die Energiequelle 14 eingeschaltet ist und die Gleichspannungsamplitude $U_{ist}$ am Verknüpfungspunkt 12 einen zweiten Vergleichswert übersteigt oder ob die Energiequelle 14 eingeschaltet ist und die abgegebene Wirkleistung $P_{ist}$ einen dritten Vergleichswert unterschreitet.

In der Darstellung in FIG 5 ist eine Tertiärregelungseinheit 32 schematisch vereinfacht als Teil einer einzelnen Energiequelle 14 gezeigt. Die Energiequelle 14 (Gleichstrom- oder Gleichspannungsquelle) ist mit weiteren gleichartigen Energiequellen 14 an einen gemeinsamen Verknüpfungspunkt 12 angeschlossen. Jede Energiequelle 14 umfasst eine grundsätzlich an sich bekannte Sensorik, zum Beispiel Gleichspannungssensoren zur Erfassung der Gleichspannungsamplitude $U_{ist}$ am Verknüpfungspunkt 12, Gleichstromsensoren zur Erfassung des von der Energiequelle 14 gelieferten Gleichstromes $I_{ist}$ und Leistungsmessgeräte zur Erfassung der von der Energiequelle 14 gelieferten Wirkleistung $P_{ist}$. Je nach Ausprägung der Sensorik kann die Wirkleistung $P_{ist}$ alternativ aus der gemessenen Gleichspannung $U_{ist}$ und dem gemessenen Gleichstrom $I_{ist}$ berechnet werden. Die erfassten Werte werden von der Tertiärregelungseinheit 32 verarbeitet. Diese umfasst oder hat Zugriff auf einen Speicher 34. In den Speicher 34 sind zum Beispiel die oben genannten Vergleichswerte (erster, zweiter, dritter Vergleichswert) als Grenzwerte 36 eingeprägt oder als veränderbare Grenzwerte 36 in den Speicher 34 geladen. Zum Vergleich zumindest einer erfassten Größe mit jeweils einem Grenzwert 36 umfasst die Tertiärregelungseinheit 32 in an sich bekannter Art und Weise einen Komparator 38 oder eine Soft- oder Firmwareimplementation eines Komparators. Auf Basis eines Ausgangssignals des Komparators 38 resultiert zumindest ein Ausgangssignal der Tertiärregelungseinheit 32. Das Ausgangssignal der Tertiärregelungseinheit 32 oder jeweils ein Ausgangssignal der Tertiärregelungseinheit 32 fungiert als Zuschalt- oder Abschaltsignal 40, 42 für die jeweilige Energiequelle 14 und bewirkt ein automatisches Zuschalten oder Abschalten der Energiequelle 14.

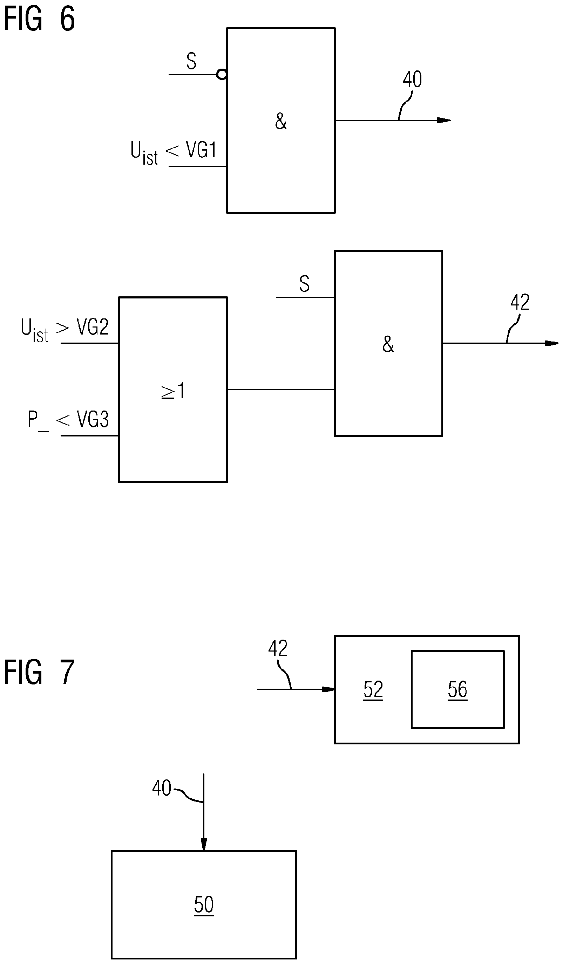

Die Darstellung in FIG 6 zeigt schematisch vereinfacht ein Logikdiagramm als Beispiel für eine Möglichkeit zur Implementation der automatischen Generierung eines Zuschalt- und Abschaltsignals 40, 42 auf Basis der als Entscheidungskriterium zum automatischen Zu- oder Abschalten von der Tertiärregelungseinheit 32 überwachten Größen.

Der Zustand der Energiequelle 14 (eingeschaltet, ausgeschaltet) wird in der Darstellung in FIG 6 kurz durch den Buchstaben "S" darstellt(S=1: Eingeschaltet, S=0: Ausgeschaltet). Die zum Beispiel in dem Speicher 34 als Grenzwerte 36 hinterlegten Vergleichswerte sind als "VG1", "VG2" und "VG3" dargestellt.

Zum automatischen Zuschalten einer Energiequelle 14 und zum Erzeugen des Zuschaltsignals 40 wird überwacht, ob die Energiequelle 14 ausgeschaltet (invertierter Eingang der UND-Verknüpfung) ist und die Gleichspannungsamplitude $U_{ist}$ am Verknüpfungspunkt 12 unter den ersten Vergleichswert sinkt. Dieser zum Beispiel mittels eines Komparators 38 implementierte Vergleich ist in der Darstellung in FIG 6 nur kurz als "$U_{ist} <$ VG1" dargestellt, wobei "VG1" der erste Vergleichswert ist.

Zum automatischen Abschalten einer Energiequelle 14 und zum Erzeugen des Abschaltsignals 42 wird überwacht, ob die Energiequelle 14 eingeschaltet ist und die Gleichspannungsamplitude $U_{ist}$ am Verknüpfungspunkt 12 einen zweiten Vergleichswert übersteigt ("$U_{ist}$ > VG2") oder ob die Energiequelle 14 eingeschaltet ist und die Wirkleistung $P_{ist}$ einen dritten Vergleichswert unterschreitet ("$P_{ist}$ < VG3"). Alternativ kann zur Abschaltung auch eine UND-Verknüpfung [("$U_{ist}$ > VG2") UND ("$P_{ist}$ < VG3")] verwendet werden.

Die Darstellung des Komparators 38 in FIG 5 kann auch als Darstellung einer zumindest einen Komparator 38 umfassenden Implementation des in FIG 6 gezeigten Logikdiagramms aufgefasst werden.

In der Darstellung in FIG 7 sind schematisch vereinfacht unterschiedliche Betriebszustände einer Energiequelle 14 gemäß FIG 5 gezeigt. Beim automatischen Zuschalten der Energiequelle 14 wird aufgrund eines Zuschaltsignals 40 oder eines entsprechenden Status eines Ausgangssignals der Tertiärregelungseinheit 32 ein Betriebszustand 50 aktiviert. Beim automatischen Abschalten der Energiequelle 14 wird aufgrund eines Abschaltsignals 42 oder eines entsprechenden Status eines Ausgangssignals der Tertiärregelungseinheit 32 ein Bereitschaftszustand 52 aktiviert.

Um ein gleichzeitiges Zu- und Abschalten mehrerer Energiequellen 14 zu verhindern, erfolgt bevorzugt die Umsetzung der Zuschalt- oder Abschaltsignale 40, 42 - oder allgemein die Umsetzung des oder jedes Ausgangssignals der Tertiärregelungseinheit 32 - in den einzelnen Energiequellen 14 entsprechend einer vorgegebenen oder vorgebbaren Zeitverzögerung, wobei die konkreten Verzögerungszeiten in allen Energiequellen 14 unterschiedlich eingestellt sind und einen hinreichend großen Abstand von mehreren Sekunden bis Minuten aufweisen. Durch die Wahl der Verzögerungszeiten wird die Reihenfolge beim Zu- und Abschalten der Energiequellen 14 festgelegt.

Diese Festlegung der Reihenfolge beim Zu- und Abschalten und die Berücksichtigung der festgelegten Reihenfolge erfolgt bevorzugt ebenfalls mittels der Tertiärregelungseinheit 32. Dafür ist dem Speicher 34 einer jeden Tertiärregelungseinheit 32 ein eindeutiger Zeitwert 54 (FIG 5) eingeprägt oder ein solcher eindeutiger Zeitwert 54 wird als veränderbarer Zeitwert 54 in den Speicher 34 geladen. Bei einer solchen Berücksichtigung von Verzögerungszeiten wird das oder jedes Ausgangssignals der Tertiärregelungseinheit 32 erst nach Ablauf des jeweiligen Zeitwerts 54 ausgegeben.

Beim eigenständigen Abschalten der Energiequellen 14 wird bevorzugt verhindert, dass die letzte verbliebene Energiequelle 14 ebenfalls abschaltet und damit die Spannungsversorgung ausfällt. Jede Energiequelle 14 überwacht deshalb zumindest im Zusammenhang mit einem geplanten automatischen Abschaltvorgang, ob sie die letzte verbliebene Energiequelle 14 am Verknüpfungspunkt 12 ist.

Eine Energiequelle, bei der ein automatischer Abschaltvorgang bevorsteht, wird im Folgenden kurz als abgehende Energiequelle 14 bezeichnet. Eine abgehende Energiequelle 14 nimmt nach Vollzug des Abschaltvorgangs nicht mehr an der Energieeinspeisung am Verknüpfungspunkt 12 teil.

Eine abgehende Energiequelle 14 senkt vor dem eigentlichen Abschalten ihren Leistungsaufpunkt Po ab, zum Beispiel über eine zeitliche Rampenfunktion. Dafür ist vorgesehen, dass die abgehende Energiequelle 14 einen automatisch aktivierbaren und automatisch deaktivierbaren Abschaltprozess 56 aktiviert. Dieser ist zum Beispiel als Teilfunktionalität des Bereitschaftszustands 52 implementiert.

Aufgrund des aktivierten Abschaltprozesses 56 und während des Abschaltprozesses 56 erfolgt das Absenken des Leistungsaufpunkts $P_0$. Ist neben der abgehenden Energiequelle 14 noch zumindest eine weitere Energiequelle 14 aktiv, wird die Leistung automatisch, nämlich aufgrund der Primärregelung auf die oder jede weitere Energiequelle 14 kommutiert. Diese übernimmt oder übernehmen also sukzessive die Einspeisung der elektrischen Leistung, welche im Zuge des Absinkens des Leistungsaufpunkts $P_0$ nicht mehr von der abgehenden Energiequelle 14 eingespeist wird. Die abgehende Energiequelle 14 überwacht automatisch während des Abschaltprozesses 56 die Gleichspannungsamplitude an ihrem Anschlusspunkt.

Erreicht die Gleichspannungsamplitude einen zum Beispiel in dem Speicher 34 als weiterer Grenzwert 36 hinterlegten Vergleichswert VG4, wird die Absenkung des Leistungsaufpunkts Po gestoppt. Der Abschaltprozesses 56 der Energiequelle 14 erkennt daran, dass die Energiequelle 14 die letzte verbliebene Energiequelle 14 am Verknüpfungspunkt 12 ist und die Energiequelle 14 schaltet sich nicht ab (der Abschaltprozess 56 wird beendet).

Wenn dagegen eine Kommutierung der Leistung erfolgt, wird der Abschaltprozess 56 fortgesetzt und die von der abgehenden Energiequelle 14 eingespeiste Leistung sinkt im Zuge des Abschaltprozesses 56 ab, zum Beispiel bis auf Null. Wenn die eingespeiste Leistung bis auf Null abgesunken ist, kann die abgehende Energiequelle 14 abgeschaltet werden (Aktivierung des Bereitschaftszustands 52). Grundsätzlich kann das Abschalten einer abgehenden Energiequelle 14 im Rahmen des Abschaltprozesses 56 automatisch auch dann erfolgen, wenn während des Abschaltprozesses 56 beim Absenken des Leistungsaufpunkts $P_0$ eine Kommutierung auf zumindest eine weitere Energiequelle 14 festgestellt wird und der Leistungsaufpunkt Po einen Schwellwert unterschreitet.

Mit anderen Worten ausgedrückt senkt die abgehende Energiequelle 14 im Rahmen des Abschaltprozesses 56 ihren Leistungsaufpunkt $P_0$ ab. Damit sinkt die Spannungsamplitude, aber nicht die Leistung $P_{ist}$. Die Absenkung der Spannung ist durch den Vergleichswert VG4 begrenzt. Wenn die Spannungsamplitude der Energiequelle 14 diesen Vergleichswert erreicht und die Leistung größer als Null ist, ist die Energiequelle 14 die letzte verbliebene Quelle und schaltet nicht ab.

Der Abschaltprozess 56 wird wie folgt verlassen: Die Leistung der Verbraucher 16 und $P_{ist}$ steigen, weil am Verknüpfungspunkt 12 angeschlossene Verbraucher 18 ihre Leistung erhöhen oder neue Verbraucher 18 zugeschaltet werden. Wenn die Spannung am Anschlusspunkt unter den Vergleichswert VG4 sinkt, hebt die Energiequelle 14 ihren Leistungsaufpunkt Po an, damit die Spannung nicht unter dem Vergleichswert VG4 bleibt. Im Ergebnis steigt $P_0$. Ein Unterschreiten des Vergleichswerts VG4 oder ein Anheben des Leistungsaufpunkts Po nach einer Unterschreitung des Vergleichswerts VG4 beenden den Abschaltprozess 56 und führen zum Verlassen des Bereitschaftszustands 52. Nach dem Verlassen des Bereitschaftszustands 52 befindet sich die Energiequelle 14 wieder im Betriebszustand 50.

Optional ist vorgesehen, dass die Wirkleistung $P_{ist}$ am Verknüpfungspunkt und/oder der Leistungsaufpunkt Po der abgehenden Energiequelle mit weiteren (zum Beispiel ebenfalls in dem Speicher 34 als Grenzwerte 36 hinterlegten) Vergleichswerten VG5 bzw. VG6 verglichen werden und eine Überschreitung dieser Vergleichswerte bewirkt eines Beendigung des Abschaltprozesses 56 und ein Verlassen des Bereitschaftszustands 52. Die Vergleichswerte VG5 und VG6 müssen einen sinnvollen Abstand zu den Vergleichswerten VG2 und VG3 aufweisen, damit die Energiequelle 14 nicht toggelt. Nach dem Verlassen des Bereitschaftszustands 52 befindet sich die Energiequelle 14 wieder im Betriebszustand 50.

Bei einem System (Gleichspannungsnetz 30 mit zumindest einem angeschlossenen Verbraucher 16) ohne ein Leitsystem 24 ist die dezentrale Tertiärregelung in den Energiequellen 14 dauerhaft aktiviert. Bei einem System (Gleichspannungsnetz 30 mit zumindest einem angeschlossenen Verbraucher 16) mit einem Leitsystem 24 wird die dezentrale Tertiärregelung in den Energiequellen 14 bevorzugt automatisch aktiviert (durch automatische Aktivierung der Tertiärregelungsfunktion der Tertiärregelungseinheit 32), wenn das Leitsystem 24 oder die Kommunikation zum Leitsystem 24 ausfallen. Als Kriterium dafür dient zum Beispiel eine in jeder Energiequelle 14, insbesondere der dortigen Tertiärregelungseinheit 32, implementierte automatische Überwachung der Kommunikation mit dem Leitsystem 24. Die automatische Überwachung der Kommunikation mit dem Leitsystem 24 ist zum Beispiel in Form einer grundsätzlich an sich bekannten Watchdog-Funktion 58 implementiert. Dabei wird jede vom Leitsystem 24 ausgehende und bei einer Energiequelle 14 eingehende Kommunikation, zum Beispiel ein vom Leitsystem 24 ausgesandtes und von einer Energiequelle 14 empfangenes Telegramm, als Lebenszeichen des Leitsystems 24 ausgewertet und setzt den Watchdog der Energiequelle 14 zurück.

Dafür hört die Watchdog-Funktion 58 die Kommunikation mit dem Leitsystem 24 mit, wie dies in der Darstellung in FIG 4 schematisch vereinfacht durch einen von dem Doppelpfeil ausgehenden und zur Watchdog-Funktion 58 weisenden Pfeil veranschaulicht ist, wobei der Doppelpfeil (wie in FIG 1) die Kommunikation zwischen der Energiequelle 14 und dem Leitsystem 24 darstellt.

Ohne ein solches Lebenszeichen läuft der dem Watchdog zugrunde liegende Zähler schließlich ab und damit ist automatisch ein ausbleibendes Lebenszeichen des Leitsystems 24 und im Ergebnis ein Ausfall des Leitsystems 24 oder ein Ausfall der Kommunikation mit dem Leitsystem 24 erkannt. Mit dem Ablauf des Watchdogs erfolgt dann die automatische Aktivierung der Tertiärregelung in den Energiequellen 14, also die automatische Aktivierung der Tertiärregelungseinheit 32.

Optional ist vorgesehen, dass das Leitsystem 24, welche auch selbst einen Ausfall der Kommunikation zu einer Energiequelle 14 erkennt, in allen kommunikativ noch erreichbaren Energiequellen 14 die dezentrale Tertiärregelung aktiviert und damit seine eigene zentrale Sekundärregelung und Tertiärregelung deaktiviert. Dann kommt es nicht zu einem Mischbetrieb zwischen den noch erreichbaren und den nicht mehr erreichbaren Energiequellen.

Die Überwachung der Kommunikation mit dem Leitsystem 24 kann noch zusätzlich abgesichert werden, indem zum Beispiel jedes vom Leitsystem 24 stammende Telegramm eine charakteristische Kennung umfasst, zum Beispiel den Wert eines mit jedem Telegramm inkrementierten Zählers. Dann wird der Watchdog einer Energiequelle 14 nur aufgrund eines eingehenden Telegramms zurückgesetzt, welches anhand der charakteristischen Kennung automatisch als Nachfolgetelegramm eines zuvor empfangenen Telegramms erkennbar ist.

Die Tertiärregelungseinheit 32 einer Energiequelle 14 (Tertiärregelungseinheit 32 einer Energiequellenvorrichtung 14) ist bevorzugt in Form eines Mikrocontrollers, in Form eines Mikroprozessors zusammen mit einem Speicher 34, in Form eines ASICs, FPGA oder dergleichen implementiert.

Die Aktivierung oder Deaktivierung der Tertiärregelungseinheit 32 kann zum Beispiel implementiert sein, indem bei einer deaktivierten Tertiärregelungseinheit 32 deren Ausgangssignale 40, 42 wirkungslos sind (zum Beispiel aufgrund einer entsprechenden Maskierung. Dann ist die interne Funktionalität der Tertiärregelungseinheit 32 unabhängig vom Aktivierungszustand aktiv. Der Aktivierungszustand beeinflusst nur die Ausgabe der Ausgangssignale 40, 42 oder die Wirksamkeit der Ausgangssignale 40, 42.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden eine Energiequelle (Energiequellenvorrichtung) 14 in Form einer Gleichstrom- oder Gleichspannungsquelle in einem Gleichspannungsnetz 30 und ein Verfahren zu deren Betrieb, wobei mittels der Energiequelle 14 elektrische Energie auf einen Verknüpfungspunkt 12 des Gleichspannungsnetzes 30 einspeisbar ist und im Betrieb eingespeist wird und wobei die Energiequelle 14 eine Tertiärregelungseinheit 32 zur dezentralen Tertiärregelung und zum automatischen Zuschalten oder Abschalten der Energiequelle 14 aufweist.

## Patentansprüche

1. Energiequelle (14) in Form einer Gleichstrom- oder Gleichspannungsquelle in einem Gleichspannungsnetz (30),
   wobei mittels der Energiequelle (14) elektrische Energie auf einen Verknüpfungspunkt (12) des Gleichspannungsnetzes (30) einspeisbar ist und
   wobei die Energiequelle (14) eine Tertiärregelungseinheit (32) zur dezentralen Tertiärregelung und zum automatischen Zuschalten oder Abschalten der Energiequelle (14) aufweist.

2. Energiequelle (14) nach Anspruch 1,
   mit einer ein Zuschaltsignal (40) generierenden Tertiärregelungseinheit (32), wenn die Energiequelle (14) ausgeschaltet ist und eine Gleichspannungsamplitude am Verknüpfungspunkt (12) unter einen ersten Vergleichswert sinkt.

3. Energiequelle (14) nach Anspruch 1 oder 2,
   mit einer ein Abschaltsignal (42) generierenden Tertiärregelungseinheit (32), wenn die Energiequelle (14) eingeschaltet ist und entweder eine bzw. die Gleichspannungsamplitude am Verknüpfungspunkt (12) einen zweiten Vergleichswert überschreitet oder eine von der Energiequelle (14) abgegebene Wirkleistung einen dritten Vergleichswert unterschreitet.

4. Energiequelle (14) nach Anspruch 2 oder 3,
   wobei das Zuschaltsignal (40) und/oder das Abschaltsignal (42) durch die Tertiärregelungseinheit (32) um eine vorgegebene oder vorgebbare Verzögerungszeit zeitverzögert ausgebbar ist.

5. Gleichspannungsnetz (30) mit einer Mehrzahl von an einem gemeinsamen Verknüpfungspunkt (12) zusammengeschlossenen Energiequellen (14) nach einem der Ansprüche 1 bis 4 sowie zumindest einem an den Verknüpfungspunkt (12) angeschlossenen Verbraucher (16).

6. Verfahren zum Betrieb einer Energiequelle (14) nach einem der Ansprüche 1 bis 4,
   wobei mittels der Energiequelle (14) elektrische Energie auf einen Verknüpfungspunkt (12) des Gleichspannungsnetzes (30) eingespeist wird,
   wobei die Energiequelle (14) eine Tertiärregelungseinheit (32) zur dezentralen Tertiärregelung aufweist und
   wobei die Tertiärregelungseinheit zum automatischen Zuschalten oder Abschalten der Energiequelle (14) ein Zuschalt- oder Abschaltsignal (40, 42) erzeugt.

7. Verfahren nach Anspruch 6,
   wobei die Tertiärregelungseinheit (32) ein Zuschaltsignal (40) zum automatischen Zuschalten der Energiequelle (14) erzeugt, wenn die Energiequelle (14) ausgeschaltet ist und eine Gleichspannungsamplitude am Verknüpfungspunkt (12) unter einen ersten Vergleichswert sinkt.

8. Verfahren nach Anspruch 6 oder 7,
   wobei die Tertiärregelungseinheit (32) ein Abschaltsignal (42) zum automatischen Abschalten der Energiequelle (14) erzeugt, wenn die Energiequelle (14) eingeschaltet ist und entweder eine bzw. die Gleichspannungsamplitude am Verknüpfungspunkt (12) einen zweiten Vergleichswert überschreitet oder eine von der Energiequelle (14) abgegebene Wirkleistung einen dritten Vergleichswert unterschreitet.

9. Verfahren nach Anspruch 6, 7 oder 8,
   wobei die Tertiärregelungseinheit (32) das Zuschaltsignal (40) und/oder das Abschaltsignal (42) um eine vorgegebene oder vorgebbare Verzögerungszeit zeitverzögert ausgibt.

10. Verfahren nach einem der Ansprüche 6 bis 9,
    wobei die Tertiärregelungseinheit (32) automatisch aktiviert wird, wenn eine Kommunikation zu einem übergeordneten Leitsystem (24) ausfällt.

11. Verfahren zum Betrieb eines Gleichspannungsnetzes (30) mit einer Mehrzahl von an einem gemeinsamen Verknüpfungspunkt (12) zusammengeschlossenen Energiequellen (14) nach Anspruch 5 sowie zumindest einem an den Verknüpfungspunkt (12) angeschlossenen Verbraucher (16), mit verschiedenen Verzögerungszeiten der Tertiärregelungseinheiten (32) aller Energiequellen (14).

12. Verfahren zum Betrieb eines Gleichspannungsnetzes (30) mit einer Mehrzahl von an einem gemeinsamen Verknüpfungspunkt (12) zusammengeschlossenen Energiequellen (14) nach Anspruch 5, zumindest einem an den Verknüpfungspunkt (12) angeschlossenen Verbraucher (16) sowie einer den Energiequellen (14) übergeordneten und mit den Energiequellen (14) kommunikativ verbundenen Leitstation (24), wobei die Tertiärregelungseinheiten (32) aller Energiequellen (14) die Kommunikation mit der Leitstation (24) überwachen und bei einem Ausfall der Kommunikation die Tertiärregelung durch die Tertiärregelungseinheiten (32) aktivieren.

13. Computerlesbares Speichermedium mit elektronisch auslesbaren Steuersignalen, die bei der Ausführung durch eine Tertiärregelungseinheit (32) diese veranlassen, das Verfahren nach einem der Ansprüche 6 bis 12 auszuführen.

FIG 1

FIG 2

FIG 3

FIG 4

FIG 5

$U_{ist}$

FIG 6

S ──○│
│ & │ ──── 40 ──→
U$_{ist}$ < VG1 ──│

U$_{ist}$ > VG2 ──│
│ ≥1 │──── S ──│
│ & │ ──── 42 ──→
P_ < VG3 ──│

FIG 7

42 ──→ │ 52    │ 56 │ │

40 ──↓
│ 50 │

Europäisches Patentamt
European Patent Office
Office européen des brevets

**EUROPÄISCHER RECHERCHENBERICHT**

Nummer der Anmeldung

EP 19 15 7434

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2011/273022 A1 (DENNIS KEVIN [US] ET AL) 10. November 2011 (2011-11-10) | 1-9,11, 13 | INV. H02J3/38 |
| Y | * Absätze [0010] - [0018], [0051] - [0064]; Abbildungen 1-18 * | 10,12 | |
| X | US 2018/198276 A1 (ZUBIETA LUIS [CA]) 12. Juli 2018 (2018-07-12) * Absätze [0004] - [0014]; Ansprüche 8-11; Abbildungen 1-7 * | 1,6,13 | |
| A | WO 2018/201224 A1 (ZUBIETA LUIS [CA]) 8. November 2018 (2018-11-08) * Seiten 4-8; Abbildungen 1-9 * | 1-13 | |
| A | DE 10 2014 108395 A1 (SMA SOLAR TECHNOLOGY AG [DE]) 17. Dezember 2015 (2015-12-17) * Absätze [0003] - [0008], [0029]; Abbildungen 1,2 * | 1-13 | |
| Y | EP 2 348 595 A2 (CONVERTEAM GMBH [DE]) 27. Juli 2011 (2011-07-27) * Absätze [0001] - [0010]; Abbildung 1 * | 10,12 | RECHERCHIERTE SACHGEBIETE (IPC) H02J |

Der vorliegende Recherchenbericht wurde für alle Patentansprüche erstellt

| Recherchenort | Abschlußdatum der Recherche | Prüfer |
|---|---|---|
| München | 20. August 2019 | Krasser, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 15 7434

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-08-2019

| Im Recherchenbericht angeführtes Patentdokument | Datum der Veröffentlichung | Mitglied(er) der Patentfamilie | Datum der Veröffentlichung |
|---|---|---|---|
| US 2011273022 A1 | 10-11-2011 | AU 2012284167 A1 | 23-01-2014 |
| | | BR 112014000639 A2 | 14-02-2017 |
| | | CA 2841052 A1 | 24-01-2013 |
| | | CN 102891494 A | 23-01-2013 |
| | | EP 2735070 A2 | 28-05-2014 |
| | | ES 2626836 T3 | 26-07-2017 |
| | | JP 6168562 B2 | 26-07-2017 |
| | | JP 2014527791 A | 16-10-2014 |
| | | KR 20140022107 A | 21-02-2014 |
| | | MX 337249 B | 16-02-2016 |
| | | RU 2014100852 A | 27-08-2015 |
| | | US 2011273022 A1 | 10-11-2011 |
| | | WO 2013012831 A2 | 24-01-2013 |
| | | ZA 201400122 B | 28-06-2017 |
| US 2018198276 A1 | 12-07-2018 | KEINE | |
| WO 2018201224 A1 | 08-11-2018 | KEINE | |
| DE 102014108395 A1 | 17-12-2015 | KEINE | |
| EP 2348595 A2 | 27-07-2011 | DE 102010005656 A1 | 21-07-2011 |
| | | EP 2348595 A2 | 27-07-2011 |

EPO FORM P0461

Für nähere Einzelheiten zu diesem Anhang : siehe Amtsblatt des Europäischen Patentamts, Nr.12/82